# EUROPEAN PATENT APPLICATION

(11) **EP 2 985 481 A1**
(43) Date of publication of application: **17.02.2016**
(21) Application number: 14783489.9
(22) Date of filing: 10.04.2014
(51) Int. Cl.: F16C 35/063, B60B 35/18, F16C 19/18, F16C 33/64, F16C 43/04

(54) **METHOD FOR CONTROLLING BEARING CLEARANCE IN WHEEL SHAFT BEARING DEVICE**

(30) Priority: 11.04.2013 JP 2013082777
(71) Applicant: NTN Corporation, Osaka-shi, Osaka 550-0003 (JP)
(72) Inventor: OGATA, Yuuki, Iwata-shi Shizuoka 438-8510 (JP)
(74) Representative: Cohausz & Florack
(86) International application number: PCT/JP2014/060441
(87) International publication number: WO 2014/168223

(57) **Abstract**

One object of the present invention is to provide method for controlling bearing clearance of wheel bearing apparatus which can exactly and stably control the bearing clearance. According to the present invention, there is provided method for controlling bearing clearance of wheel bearing apparatus comprising steps of measuring an axial distance T0 and an initial axial clearance δ0 between reference surfaces of the hub wheel and the inner ring with temporally stopping press-fitting operation under a positive bearing clearance state during press-fitting the inner ring onto the cylindrical portion of the hub wheel; measuring an axial distance T1 between the reference surfaces of the hub wheel and the inner ring after further continuation and completion of the press-fitting operation and then obtaining an axial clearance δ1 under this state from a formula δ1=δ0-(T0-T1), and obtaining an axial distance T2 after the caulking operation between the reference surfaces of the hub wheel and the inner ring from a formula T2=δ2-δ1-T1 so that the axial distance T2 becomes a target value of the bearing clearance δ2 after the caulking operation and then changing a completion end position of caulking operation of a caulking apparatus.

## Description

### Field of the Invention

The present invention relates to method for controlling bearing clearance of wheel bearing apparatus for rotationally supporting a wheel of vehicle such as an automobile, and more particularly to method for controlling bearing clearance of wheel bearing apparatus in which the bearing clearance is set to a predetermined negative clearance with applying a preload thereto.

### Description of Background Art

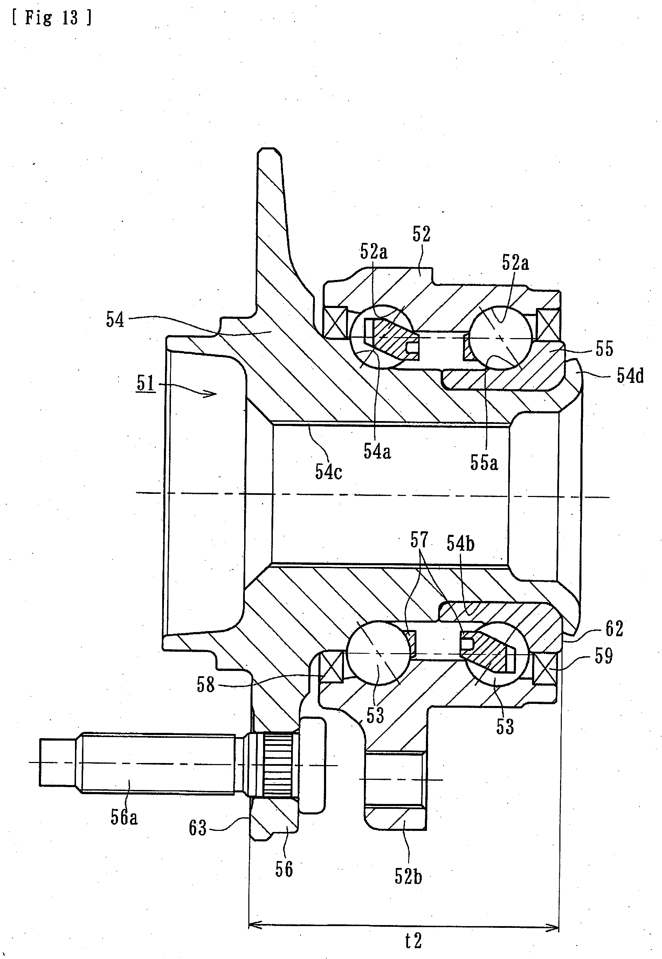

Heretofore, a predetermined bearing preload is applied to the wheel bearing apparatus to ensure a desirable bearing rigidity. A representative example of the wheel bearing apparatus of this kind is shown in Fig. 13. In descriptions of this specification, a term "outboard-side" means a side which is positioned outside of a vehicle body (e.g. left-side of Fig. 13) and a term "inboard-side" means a side which is positioned inside of a vehicle body (e.g. right-side of Fig.13) when the wheel bearing apparatus is mounted on a vehicle.

This wheel bearing apparatus is a third generation type used for a driving wheel and comprises an inner member 51, an outer member 52, and double row balls 53, 53 rollably contained between the inner and outer members 51, 52. The inner member 51 includes a hub wheel 54 and an inner ring 55 press-fitted onto the hub wheel 54.

The hub wheel 54 is integrally formed with a wheel mounting flange 56 at its outboard-side end and hub bolts 56a for securing a wheel are arranged on the wheel mounting flange 56 equidistantly along its periphery. In addition, the hub wheel 54 is formed on its outer circumference with an inner raceway surface 54a and on its inner circumference with a serration (or spline) 54c for torque transmission, and has a cylindrical portion 54b axially extending from the inner raceway surface 54a.

On the other hand, the inner ring 55 formed on its outer circumference with inner raceway surface 55a is press-fitted onto the cylindrical portion 54b of the hub wheel 54 and secured by a caulked portion 54d formed by plastically deforming the end of the cylindrical portion 54b radially outward to prevent the inner ring 55 from being axially slipped off from the hub wheel 54.

The outer member 52 is integrally formed on its outer circumference with a body mounting flange 52b to be mounted on a vehicle body (not shown) and on its inner circumference with double row outer raceway surfaces 52a, 52a. The double row balls 53, 53 contained between the inner raceway surfaces 54a, 55a and the outer raceway surfaces 52a, 52a are freely rollably held by cages 57, 57. In addition, seals 58, 59 are mounted on both ends of the outer member 52 to prevent leakage of lubrication grease contained within the bearing and entering of rain water or dust into the bearing from outside.

Since this wheel bearing apparatus adopts a so-called self-retaining structure in which the inner ring 55 is secured by the caulked portion 54d formed by plastically deforming the end of the cylindrical portion 54b of the hub wheel 54 radially outward, it is unnecessary as a previous wheel bearing apparatus to control the preload amount by strongly fastening a nut, etc. and thus it is possible to simplify assembly of the wheel bearing apparatus to a vehicle and to maintain the preload amount for a long term. However, since the bearing clearance would be varied e.g. by deformation of the inner ring 55 due to the caulking operation or variations of the caulking load, it is difficult to exactly control the preload amount among the wheel bearing apparatus.

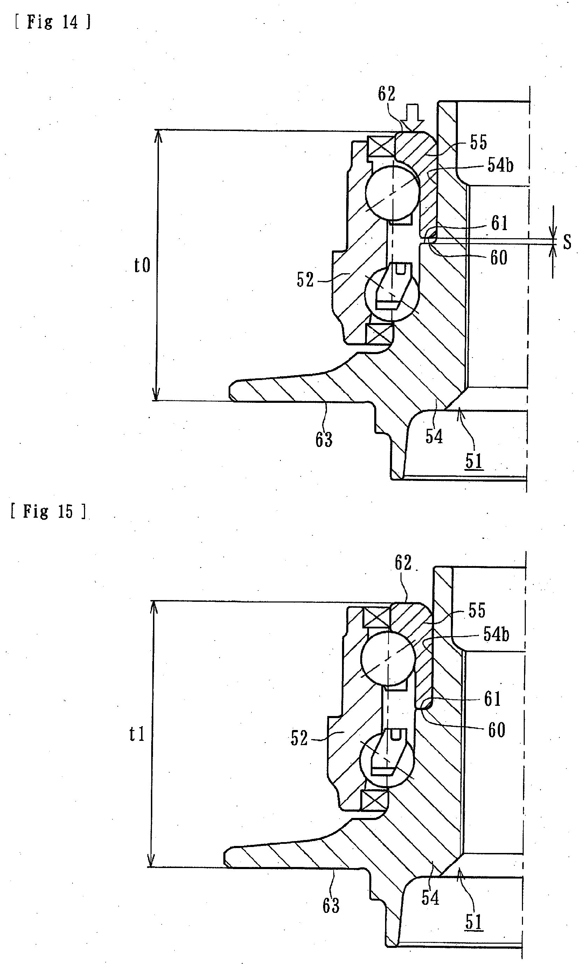

Accordingly, a following assembling process of the wheel bearing apparatus has been performed. That is, firstly the inner ring 55 is press-fitted onto the cylindrical portion 54b of the hub wheel 54 as shown in Fig.14 and the press-fitting operation is stopped once just before a smaller end face 60 of the inner ring 55 is abutted against a shoulder portion 61 of the hub wheel 54. A predetermined distance S is remained at this time between the smaller end face 60 of the inner ring 55 and the shoulder portion 61 of the hub wheel 54 and the thus the axial clearance of the bearing is positive. Under this state, an axial distance t0 from a reference surface (larger end face) 62 of the inner ring 55 to a reference surface (flange side surface) 63 of the hub wheel 54 is measured and furthermore an initial axial clearance δ0 of the bearing is measured from an axial moving amount of the outer member 52 relative to the inner member 51.

Then, the inner ring 55 is continuously press-fitted onto the hub wheel 54 until the smaller end face 60 of the inner ring 55 is abutted against the shoulder portion 61 of the hub wheel 54 as shown in Fig. 15 and an axial distance t1 from the reference surface 62 of the inner ring 55 to the reference surface 63 of the hub wheel 54 is measured. Then, an axial bearing clearance δ1 after the press-fitting of the inner ring 55 onto the hub wheel 54 is obtained from a formula δ1=δ0-(t0-t1).

Then, the caulking operation is performed and an axial distance t2 from the reference surface 62 of the inner ring 55 to the reference surface 63 of the hub wheel 54 after the caulking is measured as shown in Fig. 13. Although the preload amount is increased because of reduction of the bearing clearance due to caulking, the clearance reduction amount (preload increment) can be expressed as (t1-t2). Accordingly, the bearing clearance (preload amount) δ2 of a finally assembled wheel bearing apparatus after caulking can be obtained from a formula δ2=δ1 + (t1-t2).

According to such bearing clearance control method of the prior art, it is possible to provide a wheel bearing apparatus in which appropriate preload amount can be guaranteed by controlling the negative bearing clearance after assembly of the wheel bearing apparatus based on measured values in the assembling process of the wheel bearing apparatus (see e.g. Patent Document 1 below).

### Patent Document of the Prior art

### Patent Document

Patent Document 1 : JP 2001-225606 A

### Disclosure of the Invention

### Problems to be solved by the Invention

However, in such bearing clearance control method of the prior art, although it is possible to obtain the preload amount of bearing from the bearing clearance (preload amount) δ2 of the finally assembled bearing apparatus of which caulking having been completed, it is very difficult in the real assembling process to accurately and stably control the final bearing clearance δ2 due to variation of the bearing clearance δ1 before caulking or variation of the decrement (t1-t2) of the bearing clearance due to caulking operation.

It is therefore an object of the present invention to provide method for controlling bearing clearance of wheel bearing apparatus which can exactly and stably control the bearing clearance by inputting to a computer and operation processing measured values of the bearing clearance and assembly width before caulking of previously measured individual wheel bearing apparatus, and by correcting an end position of completion of caulking operation of a caulking apparatus so that the bearing clearance after caulking becomes constant.

### Means for solving the Problems

For achieving the object of the present invention, there is provided, according to the present invention of claim 1, method for controlling bearing clearance of wheel bearing apparatus comprising an outer member formed on its outer circumference with a body mounting flange to be mounted on a body of a vehicle and on its inner circumference with double row outer raceway surfaces; an inner member including a hub wheel and an inner ring or an outer joint member of a constant velocity universal joint, the hub wheel being formed on its one end with a wheel mounting flange and having a cylindrical portion axially extending from the wheel mounting flange, and the inner ring or the outer joint member being press-fitted onto or into the cylindrical portion of the hub wheel, the inner member being formed on its outer circumference with double row inner raceway surfaces opposing to the double row outer raceway surfaces; and double row rolling elements freely rollably contained between the outer raceway surfaces of the outer member and the inner raceway surfaces of the inner member; and the inner ring or the outer joint member being secured on the hub wheel by a caulked portion formed by plastically deforming the end of the cylindrical portion of the hub wheel or the end of the outer joint member radially outward characterized in that the method comprises steps of measuring an axial distance T0 and an initial axial clearance δ0 between reference surfaces of the hub wheel and the inner ring or reference surfaces of the hub wheel and the outer joint member with temporally stopping press-fitting operation under a positive bearing clearance state during press-fitting the inner ring or the outer joint member onto or into the cylindrical portion of the hub wheel; measuring an axial distance T1 between the reference surfaces of the hub wheel and the inner ring or the reference surfaces of the hub wheel and the outer joint member after further continuation and completion of the press-fitting operation and then obtaining an axial clearance δ1 under this state from a formula δ1=δ0-(T0-T1), and obtaining an axial distance T2 after the caulking operation between the reference surfaces of the hub wheel and the inner ring or the reference surfaces of the hub wheel and the outer joint member from a formula T2=δ2-δ1-T1 so that the axial distance T2 becomes a target value of the bearing clearance δ2 after the caulking operation and then changing a completion end position of caulking operation of a caulking apparatus.

According to the present invention of claim 1, since the inner ring or the outer joint member is secured on the hub wheel by a caulked portion formed by plastically deforming the end of the cylindrical portion of the hub wheel or the end of the outer joint member radially outward and is characterized in that the method comprises steps of measuring an axial distance T0 and an initial axial clearance δ0 between reference surfaces of the hub wheel and the inner ring or reference surfaces of the hub wheel and the outer joint member with temporally stopping press-fitting operation under a positive bearing clearance state during press-fitting the inner ring or the outer joint member onto or into the cylindrical portion of the hub wheel; measuring an axial distance T1 between the reference surfaces of the hub wheel and the inner ring or the reference surfaces of the hub wheel and the outer joint member after further continuation and completion of the press-fitting operation and then obtaining an axial clearance δ1 under this state from a formula δ1=δ0-(T0-T1), and obtaining an axial distance T2 after the caulking operation between the reference surfaces of the hub wheel and the inner ring or the reference surfaces of the hub wheel and the outer joint member from a formula T2=δ2-δ1-T1 so that the axial distance T2 becomes a target value of the bearing clearance δ2 after the caulking operation and then changing a completion end position of caulking operation of a caulking apparatus, it is possible to exactly set a desirable bearing clearance and also to exactly and stably control the preload amount of bearing even if there would be variations in materials or dimensions of the hub wheel or the outer joint member. In addition, it is possible to surely prevent occurrence of defective products inconvenience in performances such as under-caulking or over-caulking and to reduce manufacturing cost.

It is preferable as defined in claim 2 that the method for controlling bearing clearance of wheel bearing apparatus further comprises a step of arbitrarily changing the end position of completion of the caulking operation of a caulking apparatus by a movable stopper.

It is preferable as defined in claim 3 that the method for controlling bearing clearance of wheel bearing apparatus further comprises steps of previously measuring a deformation amount of the inner ring due to the caulking operation and then adding a corrected value of the deformation amount converted to the axial direction to the bearing clearance δ2 after the caulking operation. This makes it possible to achieve a further exact control of the bearing clearance.

It is also preferable as defined in claim 4 that the method for controlling bearing clearance of wheel bearing apparatus further comprises steps of transferring the bearing clearance δ1 and the axial distance T1 before the caulking operation to the caulking apparatus together with identification codes printed on individual wheel bearing apparatus and storing therein and then retrieving these information just before the caulking operation by matching the identification codes to the information. This makes it possible to exactly, stably and effectively control the preload amount of the bearing if the process for press-fitting the inner ring onto or the outer joint member into the hub wheel and the caulking process are far each other.

It is also preferable as defined in claim 5 that the inner member comprises the hub wheel and the outer joint member, the outer joint member is integrally formed with a cup-shaped mouth portion, a shoulder portion forming a bottom of the mouth portion, and a cylindrical shaft portion axially extending from the shoulder portion, the shaft portion is formed with a faucet portion fitted into the cylindrical portion of the hub wheel via a predetermined interference and with a serration at one end of the faucet portion, a serration engaging the serration of the outer joint member is formed on the inner circumference of the hub wheel, a preload is applied to the wheel bearing apparatus by pressing the hub wheel with the outer joint member being vertically placed on a receptacle table and then the end of the shaft portion of the outer joint member is plastically deformed radially outward.

### Effects of the Invention

According to the method for controlling bearing clearance of wheel bearing apparatus of the present invention, since it comprises an outer member formed on its outer circumference with a body mounting flange to be mounted on a body of a vehicle and on its inner circumference with double row outer raceway surfaces; an inner member including a hub wheel and an inner ring or an outer joint member of a constant velocity universal joint, the hub wheel being formed on its one end with a wheel mounting flange and having a cylindrical portion axially extending from the wheel mounting flange, and the inner ring or the outer joint member being press-fitted onto or into the cylindrical portion of the hub wheel, the inner member being formed on its outer circumference with double row inner raceway surfaces opposing to the double row outer raceway surfaces; and double row rolling elements freely rollably contained between the outer raceway surfaces of the outer member and the inner raceway surfaces of the inner member; and the inner ring or the outer joint member being secured on the hub wheel by a caulked portion formed by plastically deforming the end of the cylindrical portion of the hub wheel or the end of the outer joint member radially outward and is characterized in that the method comprises steps of measuring an axial distance T0 and an initial axial clearance δ0 between reference surfaces of the hub wheel and the inner ring or reference surfaces of the hub wheel and the outer joint member with temporally stopping press-fitting operation under a positive bearing clearance state during press-fitting the inner ring or the outer joint member onto or into the cylindrical portion of the hub wheel; measuring an axial distance T1 between the reference surfaces of the hub wheel and the inner ring or the reference surfaces of the hub wheel and the outer joint member after further continuation and completion of the press-fitting operation and then obtaining an axial clearance δ1 under this state from a formula δ1=δ0-(T0-T1), and obtaining an axial distance T2 after the caulking operation between the reference surfaces of the hub wheel and the inner ring or the reference surfaces of the hub wheel and the outer joint member from a formula T2=δ2-δ1-T1 so that the axial distance T2 becomes a target value of the bearing clearance δ2 after the caulking operation and then changing an end position of completion of the caulking operation of a caulking apparatus, it is possible to exactly set a desirable bearing clearance and also to exactly and stably control the preload amount of bearing even if there would be variations in materials or dimensions of the hub wheel or the outer joint member. In addition, it is possible to surely prevent occurrence of defective products inconvenience in performances such as under-caulking or over-caulking.

### Brief Description of the Drawings

[Fig.1] A longitudinal section view showing a first preferable embodiment of the wheel bearing apparatus of the present invention;
[Fig.2] A partially enlarged view showing an outboard-side seal of Fig.1;
[Fig.3] A partially enlarged view showing an inboard-side seal of Fig. 1;
[Fig.4] An explanatory view showing a press-fitting process of an inner ring of Fig. 1;
[Fig.5] An explanatory view showing a state after the press-fitting process of the inner ring of Fig. 1;
[Fig.6] An explanatory view showing a caulking apparatus;
[Fig.7] An explanatory view showing a caulking process by the caulking apparatus of Fig. 6;
[Fig.8] A process chart showing the method for controlling bearing clearance of wheel bearing apparatus of the present invention;
[Fig.9] A longitudinal section view showing a second preferable embodiment of the wheel bearing apparatus of the present invention;
[Fig.10] An explanatory view showing a press-fitting process of an outer joint member of Fig. 9;
[Fig.11] An explanatory view showing a state after the press-fitting process of the outer joint member of Fig. 9;
[Fig. 12] An explanatory view showing a caulking process by the caulking apparatus of Fig. 6;
[Fig. 13] A longitudinal section view showing a finally assembled product of a wheel bearing apparatus of the prior art;
[Fig. 14] An explanatory view showing an inner ring press-fitting process of the wheel bearing apparatus of Fig. 13; and
[Fig. 15] An explanatory view showing a state after the press-fitting process of the inner ring of the wheel bearing apparatus of Fig. 13.

### Best mode for carrying out the Invention

The best mode for carrying out the present invention is method for controlling a bearing clearance of a wheel bearing apparatus comprising an outer member formed on its outer circumference with a body mounting flange to be mounted on a body of a vehicle and on its inner circumference with double row outer raceway surfaces; an inner member including a hub wheel and an inner ring, the hub wheel being formed on its one end with a wheel mounting flange and having a cylindrical portion axially extending from the wheel mounting flange, and the inner ring being press-fitted onto the cylindrical portion of the hub wheel, the inner ring being formed on its outer circumference with an inner raceway surface opposing to one of the double row outer raceway surfaces; and double row rolling elements freely rollably contained between the outer raceway surfaces of the outer member and the inner raceway surfaces of the inner member; and the inner ring being secured on the hub wheel by a caulked portion formed by plastically deforming the end of the cylindrical portion of the hub wheel radially outward characterized in that the method comprises steps of measuring an axial distance T0 and an initial axial clearance δ0 between reference surfaces of the hub wheel and the inner ring with temporally stopping press-fitting operation under a positive bearing clearance state during press-fitting the inner ring onto the cylindrical portion of the hub wheel; measuring an axial distance T1 between the reference surfaces of the hub wheel and the inner ring after further continuation and completion of the press-fitting operation and then obtaining an axial clearance δ1 under this state from a formula δ1=δ0-(T0-T1), transferring and feeding back the bearing clearance δ1 and the axial distance T1 before the caulking operation to the caulking apparatus together with identification codes printed on individual wheel bearing apparatus and storing therein and then retrieving these information just before the caulking operation by matching the identification codes to the information, and obtaining an axial distance T2 after the caulking operation between the reference surfaces of the hub wheel and the inner ring from a formula T2=δ2-δ1-T1 so that the axial distance T2 becomes a target value of the bearing clearance δ2 after the caulking operation and then changing an end position of completion of the caulking operation of a caulking apparatus.

Preferable embodiments of the present invention will be hereinafter described with reference to the drawings.

### First Embodiment

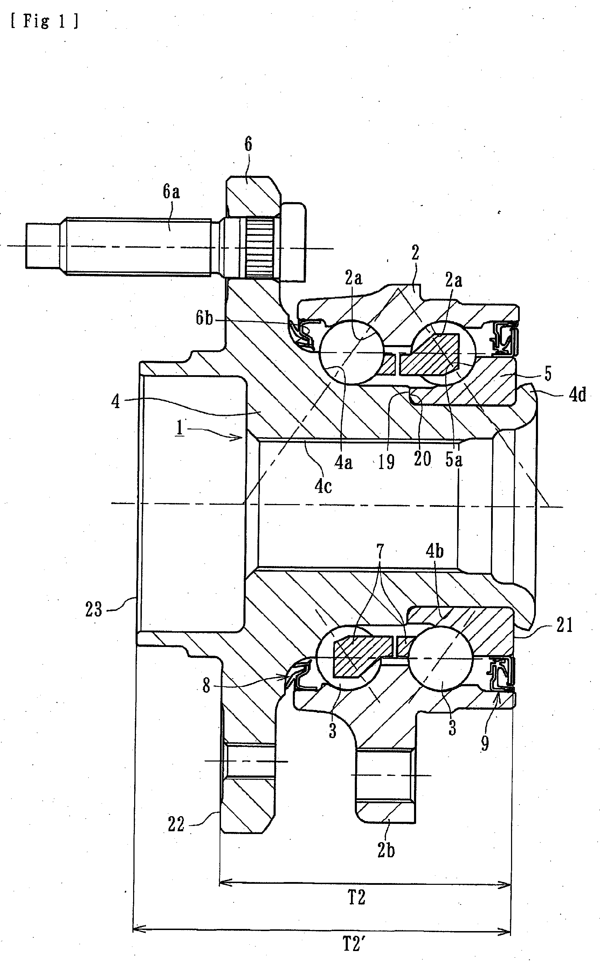

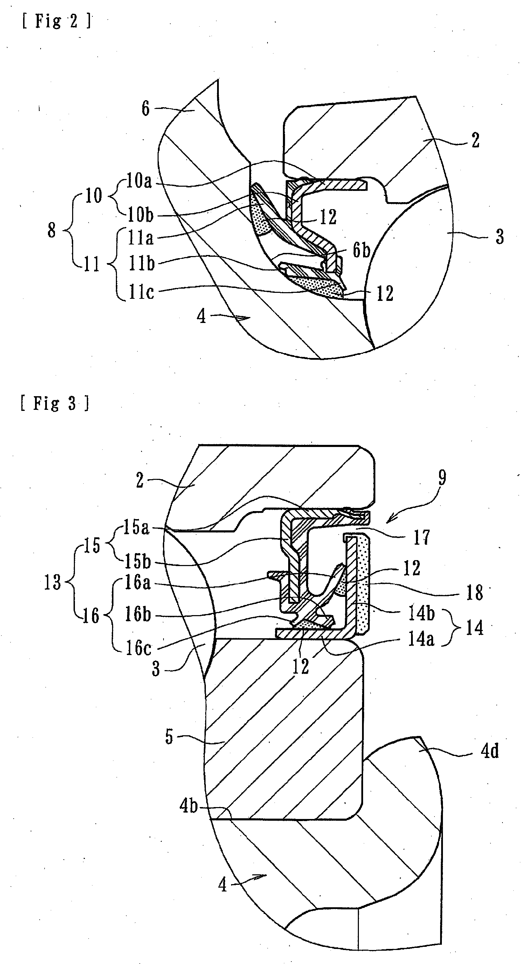

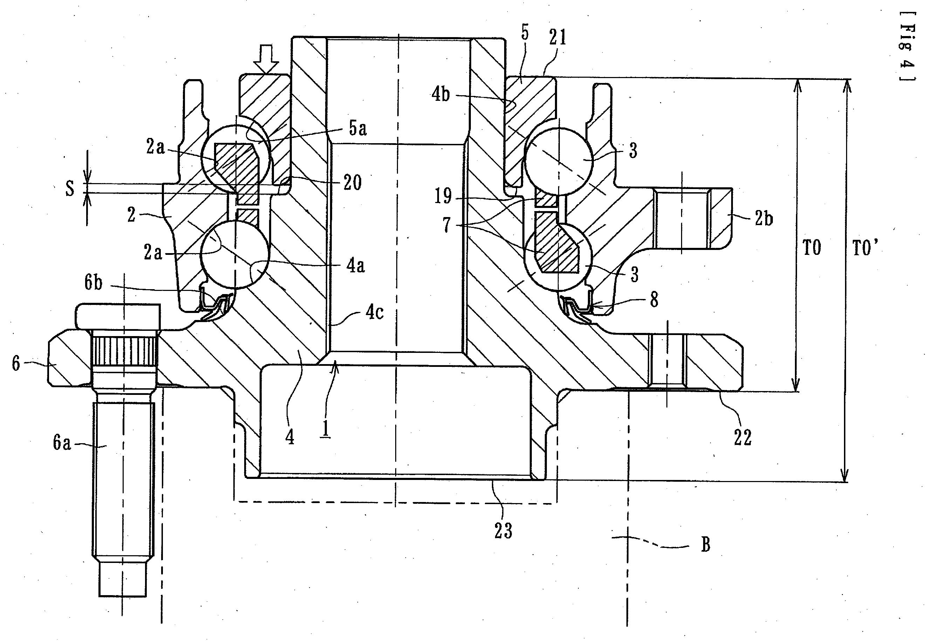

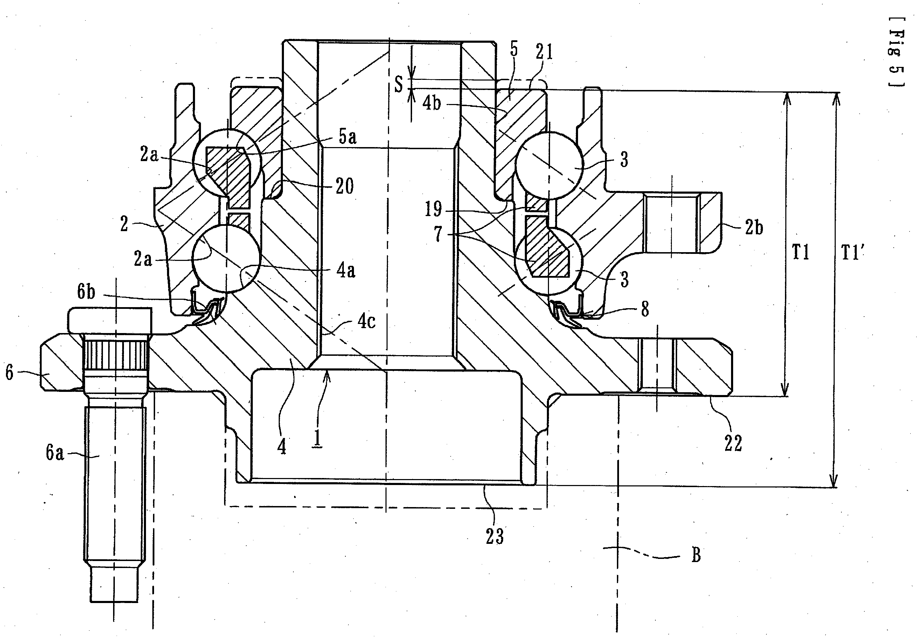

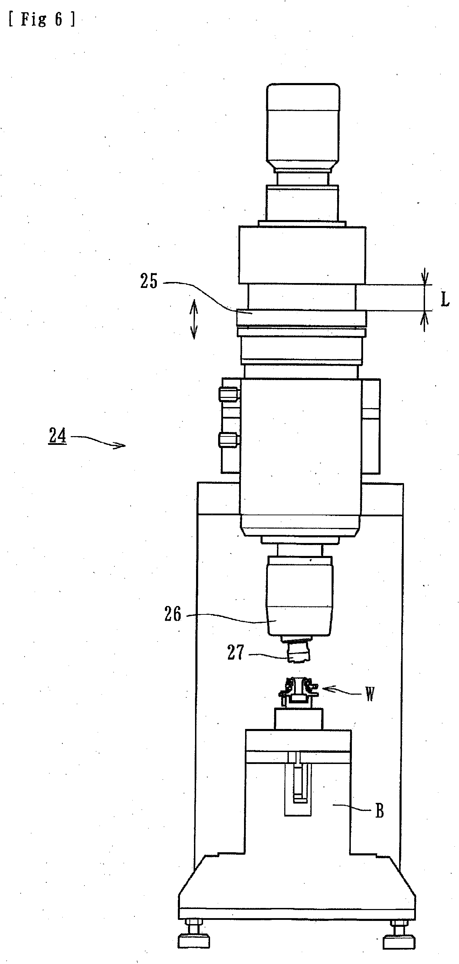

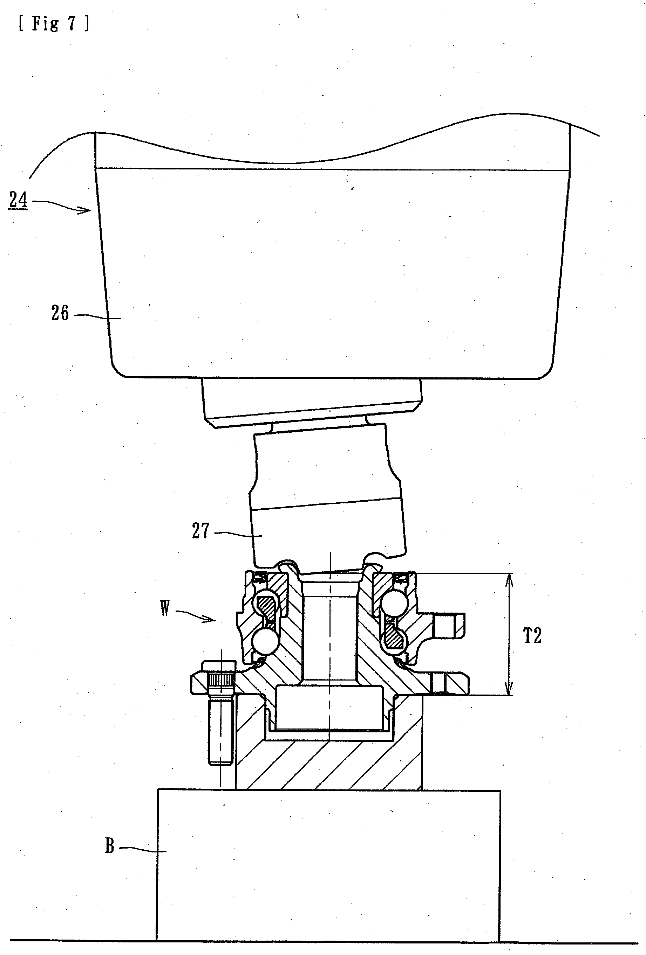

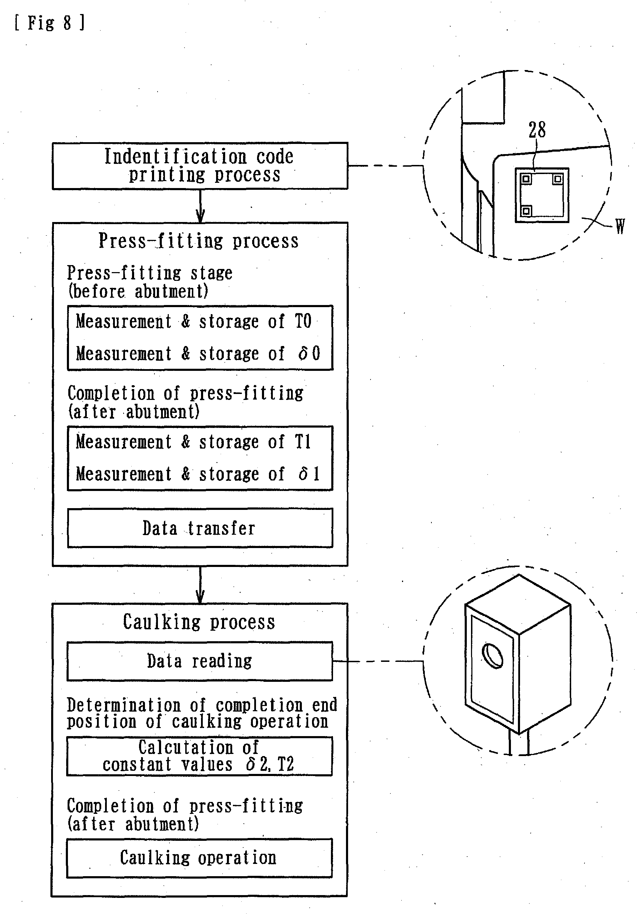

Fig. 1 is a longitudinal section view showing a first preferable embodiment of the wheel bearing apparatus of the present invention, Fig. 2 is a partially enlarged view showing an outboard-side seal of Fig. 1, Fig. 3 is a partially enlarged view showing an inboard-side seal of Fig. 1, Fig. 4 is an explanatory view showing a press-fitting process of an inner ring of Fig. 1, Fig. 5 is an explanatory view showing a state after the press-fitting process of the inner ring of Fig. 1, Fig.6 is an explanatory view showing a caulking apparatus, Fig. 7 is an explanatory view showing a caulking process by the caulking apparatus of Fig. 6, and Fig. 8 is a process chart showing the method for controlling bearing clearance of wheel bearing apparatus of the present invention;

The wheel bearing apparatus shown in Fig. 1 is a third generation type used for a driving wheel and comprises an inner member 1, an outer member 2, and double row rolling elements (balls) 3, 3 rollably contained between the inner and outer members 1, 2. The inner ring 1 includes the hub wheel 4 and a separate inner ring 5 press-fitted on the hub member 4.

The hub wheel 4 is integrally formed with a wheel mounting flange 6 at its outboard-side, and hub bolts 6a for securing a wheel are arranged on the wheel mounting flange 6 equidistantly along its periphery. The hub wheel 4 is formed on its outer circumference with an inner raceway surface 4a and on its inner circumference with a serration (or spline) 4c for torque transmission and has a cylindrical portion 4b axially extending from the inner raceway surface 4a.

The hub wheel 4 is made of medium/high carbon steel including carbon of 0.40 to 0.80 % by weight such as S53C and hardened by high frequency induction quenching so that a region from a base 6b of the wheel mounting flange 6 forming a seal land portion of the seal 8 to the cylindrical portion 4b including the inner raceway surface 4a is hardened to have surface hardness of HRC 58 to 64. The end portion of the cylindrical portion 4b is not quenched and remained as its surface hardness after forging less than HRC 25.

On the other hand, the inner ring 5 is formed on its outer circumference with a inner raceway surface 5a and press-fitted onto the cylindrical portion 4b of the hub wheel 4 and is axially secured on the hub wheel 4 by a caulked portion 4d formed by plastically deforming the end of the cylindrical portion 4b radially outward. The inner ring 5 and the rolling elements 3 are formed of high carbon chrome steel such as SUJ2 and hardened to their core by dipping quenching so as to have a hardness of HRC 58 to 64.

The outer member 2 is integrally formed on its outer circumference with a body mounting flange 2b to be mounted on a body (not shown) of a vehicle and on its inner circumference with double row outer raceway surfaces 2a, 2a. Similarly to the hub wheel 4, the outer member 2 is formed of medium/high carbon steel including carbon of 0.40 to 0.80 % by weight and at least surfaces of the double row outer raceway surfaces 2a, 2a are hardened by high frequency induction quenching so as to have a surface hardness of HRC 58 to 64. The double row balls 3, 3 are contained between these outer raceway surfaces 2a, 2a and inner raceway surfaces 4a, 5a of the inner member 1 and rollably held by cages 7, 7. Seals 8, 9 are mounted within annular openings formed between the outer member 2 and the inner member 1 to prevent leakage of grease contained in the bearing and entering of rainwater or dust into the bearing from outside.

According to the present embodiment, the outboard-side seal 8 is formed as an integrated seal comprising a core metal 10 and a sealing member 11 integrally adhered to the core metal 10 via vulcanized adhesion as shown in an enlarged view of Fig. 2. The core metal 10 is press-formed of ferritic stainless steel sheet (JIS SUS430 etc.), austenitic stainless steel sheet (JIS SUS304 etc.) or preserved cold rolled steel sheet (JIS SPCC etc.) as having a substantially L-shaped cross-section and has a cylindrical fitting portion 10a to be fitted into the outboard-side end of the outer member 2 and a radial portion 10b extending radially inward from the end of the fitting portion 10a. The sealing member 11 extends to cover outer surfaces of the radial portion 10b and part of the fitting portion 10a and a part of an inner surface of the radial portion 10b to form a so-called "half metal structure". This enables to improve the sealability of the fitting portion 10a to protect the inside of the bearing.

The sealing member 11 is formed of synthetic rubber such as NBR (acrylonitrile-butadiene rubber) and comprises a side lip 11a and a dust lip 11b inclined radially outward and adapted to be sliding contacted to the inner-side surface of the base portion 6b of the wheel mounting flange 6 and a grease lip 11c inclined toward the inboard-side of the bearing. Examples of materials used for sealing member 11 other than NBR are e.g. HNBR (hydrogenated acrylonitrile-butadiene rubber), EPDM (ethylene propylene rubber) etc. having high heat resistance as well as ACM (polyacrylic rubber), FKM (fluorinated rubber) or silicone rubber having high heat resistance and chemical resistance.

Grease 12 having at least same thickener as that previously sealed in the bearing is applied to each sliding-contact portion of the sealing lips. This enables to reduce frictional torque of the lips and accordingly rotational torque of the seal 8 with keeping the bearing performance.

As shown in the enlarged view of Fig. 3, an inboard-side seal 9 is formed as a so-called pack seal comprising an annular sealing plate 13 and a slinger 14 each having a substantially L-shaped cross-section and arranged oppositely each other.

The annular sealing plate 13 comprises a core metal 15 press-fitted into the inboard-side end of the outer member 2 and a sealing member 16 integrally adhered to the core metal 15 via vulcanized adhesion. The core metal 15 is press-formed of ferritic stainless steel sheet, austenitic stainless steel sheet or preserved cold-rolled steel sheet as having a substantially L-shaped cross-section and comprises a cylindrical fitting portion 15a press-fitted into the end of the outer member 2 and a radial portion 15b radially extending from the end of the fitting portion 15a. A tip end of the fitting portion 15a of the core metal 15 is thinned and a sealing member 16 covers the tip end of the fitting portion to form the half metal structure.

On the other hand, the slinger 14 is press-formed of ferritic stainless steel sheet, austenitic stainless steel sheet or preserved cold-rolled steel sheet as having a substantially L-shaped cross-section and comprises a cylindrical portion 14a press-fitted onto the outer circumference of the inner ring 5 and an annular standing plate portion 14b extending radially outward from the cylindrical portion 14a. A small radial clearance is formed between the outer peripheral edge of the standing plate portion 14b and sealing member 16 to form a labyrinth seal 17.

The sealing member 16 is formed of synthetic rubber such as NBR etc. and comprises a side lip 16a slide-contacting the outboard-side surface of the standing plate portion 14b of the slinger 14 via a predetermined axial interference and a grease lip 16c and a dust lip 16b both formed as a two branched form at radially inside of the side lip 16a and slide-contacting the outer circumference of the cylindrical portion 14a of the slinger 14 via a predetermined radial interference. A magnetic encoder 18 is integrally adhered to the inboard-side surface of the standing plate portion 14b via vulcanized adhesion. The magnetic encoder 18 is formed of elastomer mingled with magnetic powder such as ferrite and magnetized by magnetic poles N and S alternately arranged along the circumferential direction of the encoder 18 to form a rotary encoder for detecting rotational speed of a wheel.

Although it is shown here a wheel bearing apparatus of a double row angular contact ball bearing using balls as the rolling elements 3, it should be noted that the present invention is not limited to such a wheel bearing apparatus and can be applied to a double row tapered roller bearing using tapered rollers as the rolling elements. In addition, although it is shown a third generation type wheel bearing apparatus in which the inner raceway surface 4a is directly formed on the outer circumference of the hub wheel 4, the present invention can be applied to wheel bearing apparatus of the second generation type in which a pair of inner rings are press-fitted on a cylindrical portion of the hub wheel.

Then, the method for controlling bearing clearance of wheel bearing apparatus of the present invention will be described. First of all, the inner ring 5 is press-fitted onto the cylindrical portion 4b of the hub wheel 4 and stopped once just before a smaller end face 19 is abutted against a shoulder portion 20 of the hub wheel 4 during the assembling stage of the wheel bearing apparatus as shown in Fig. 4. That is, a predetermined distance S is remained at this time between the smaller end face 19 of the inner ring 5 and the shoulder portion 20 of the hub wheel 4 and the thus the axial clearance of the bearing is positive. Under this state, placing the wheel bearing apparatus vertically, an axial distance (assembly width) T0 from a reference surface (larger end face) 21 of the inner ring 5 to a reference surface (outboard-side surface of the wheel mounting flange 6) 22 of the hub wheel 4 is measured and furthermore an initial axial clearance δ0 of the bearing is measured from an axial moving amount of the outer member 2 relative to the inner member 1. In this case, the reference surface of the hub wheel 4 is not limited to the outboard-side surface 22 of the wheel mounting flange 6 and it may be possible to use the outboard-side end face 23 as the reference surface of the hub wheel 4 and to measure an axial distance T0' from the reference surface (larger end face) 21 to the reference surface 23 of the hub wheel 4.

Then, the inner ring 5 is continuously press-fitted onto the hub wheel 4 until the smaller end face 19 of the inner ring 5 is abutted against the shoulder portion 20 of the hub wheel 4 as shown in Fig. 5 and an axial distance T1 from the reference surface 21 of the inner ring 5 to the reference surface 22 of the hub wheel 4 is measured. Then, an axial bearing clearance δ1 after the press-fitting of the inner ring 5 onto the hub wheel 4 is obtained from a formula δ1=δ0-(T0-T1).

Then, an operation process for correcting a completion end position of caulking operation of the caulking apparatus 24 is performed prior to the caulking process mentioned above. As shown in Fig. 6, the caulking apparatus 24 can arbitrarily change the completion end position of caulking operation by a movable stopper 25. More particularly, a caulking jig 27 secured on a caulking head 26 is abutted against a work (i.e. wheel bearing apparatus) W vertically placed on a receptacle table B by descending the caulking head 26 by a predetermined stroke L. Then, an assembly width T2 of a product (wheel bearing apparatus) after caulking operation is changed by changing the completion end position of the caulking apparatus 24 as shown in Fig. 7. That is, an amount of variation of the bearing clearance (axial clearance) due to the caulking operation is changed. At this time, the bearing clearance (preload amount) δ2 of the finally assembled product after caulking can be obtained from a formula δ2=δ1 + (T1 + T2).

At this time, T2 is obtained by operating previously measured δ1 and T1 of individual products with keeping the bearing clearance δ2 of the finally assembled product constant. In other words, the caulking process is performed by adjusting the completion end position of the caulking apparatus 24 through the stopper 25 so that it becomes T2 obtained by operating δ1 and T1 of individual products. That is, the axial distance T2 after the caulking operation between the reference surfaces of the hub wheel 4 and the inner ring 5 is obtained from a formula T2=δ2-δ1-T1 so that the axial distance T2 becomes a target value of the bearing clearance δ2 after the caulking operation and then a completion end position of caulking operation of a caulking apparatus 24 is changed. This makes it possible to keep the bearing clearance of the finally assembled products constant.

Furthermore, since the step for measuring δ1 and T1 (i.e. step for press-fitting the inner ring 5 onto the hub wheel 4) and the caulking step are far each other in actual assembling process, it is substantially difficult to feedback the measured values of δ1 and T1 of individual products to the caulking step. Thus according to the present embodiment, identification codes 28 such as QR codes (registered trade mark) etc. are printed on individual products (wheel bearing apparatus) as shown in Fig. 8 and measured values of δ1 and T1 together with these identification codes 28 are stored in memories or magnetic memory devices and then the identification codes 28 is read out to retrieve the information from the memories and feed back to the caulking process just before the caulking operation. The measured values of δ1 and T1 may be also incorporated into the identification codes 28 or printed together with the identification codes 28. This enables intermediate recorded data to be remained on products and thus a user to refer the data without need of referring memory means of a manufacturing factory.

Accordingly, it is possible to exactly set a desirable bearing clearance and also to exactly and stably control the preload amount of bearing even if there would be variations in materials or dimensions of the hub wheel 4 by adjusting the caulking process so that the assembly width (T1-T2) becomes small when the bearing clearance before caulking process is large and adversely by adjusting the caulking process so that the assembly width (T1-T2) becomes large when the bearing clearance before caulking process is small. In addition, it is possible to surely prevent occurrence of defective products inconvenience in performances such as under-caulking or over-caulking and to reduce manufacturing cost.

In such a case, it is supposed that the inner ring 5 would be deformed not only in an axial direction but a radial direction and give influence to the bearing clearance when the inner ring 5 is axially secured by the caulked portion 4d. According to the present embodiment, a deformation amount of the inner ring 5 due to the caulking operation is previously measured and then a corrected value γ of the deformation amount converted to the axial direction is added to a measured value δ2 of the bearing clearance after the caulking operation. This enables to perform further exact bearing clearance control.

### Second Embodiment

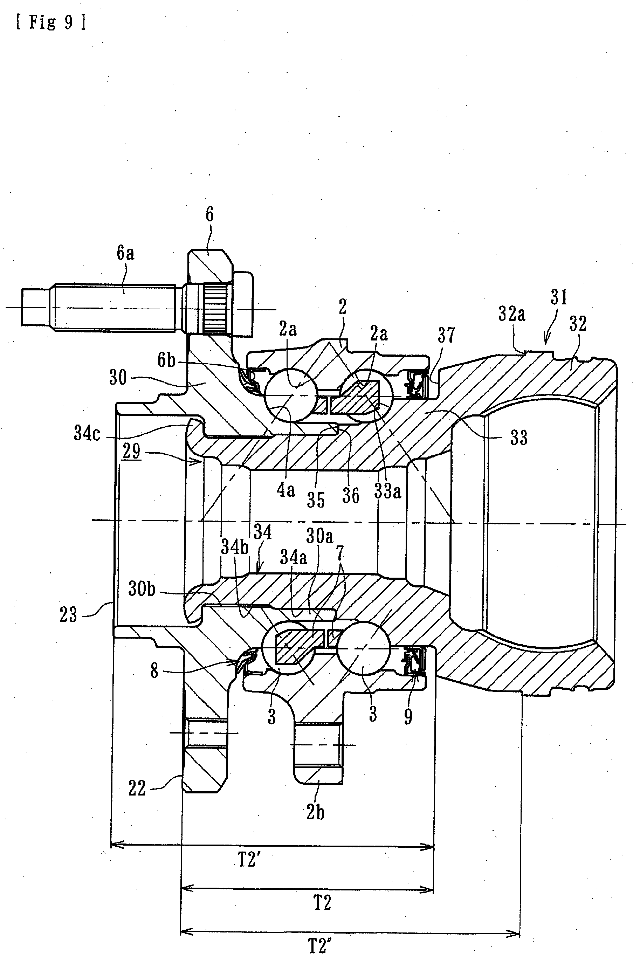

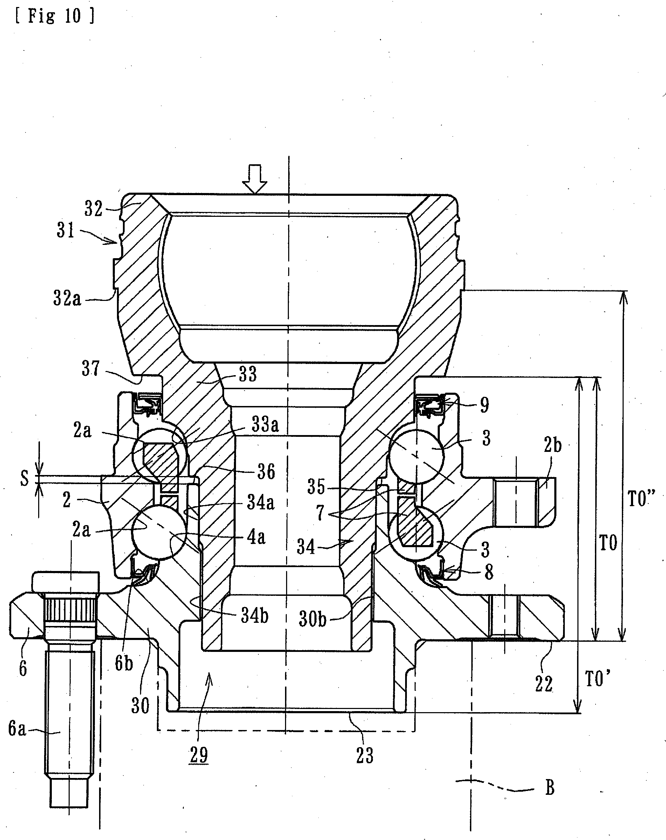

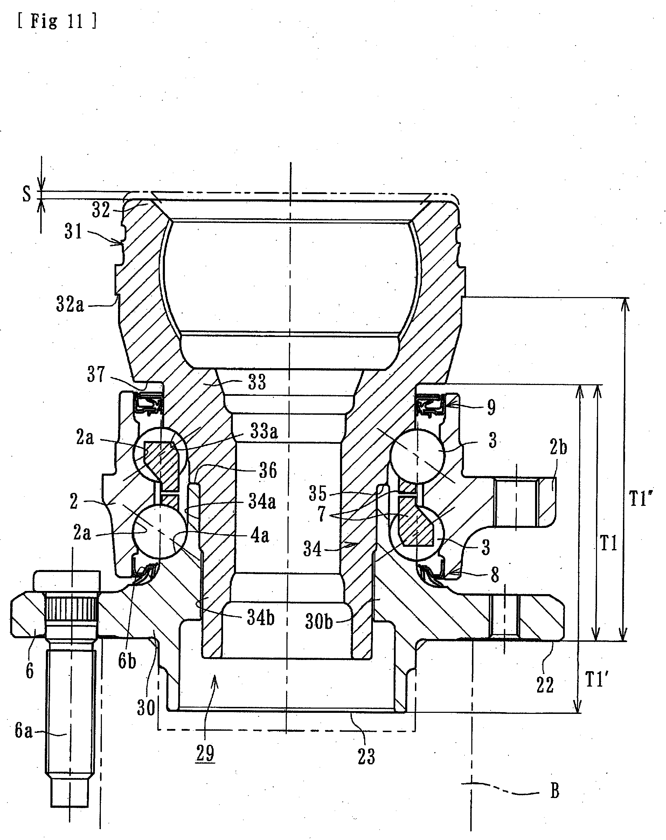

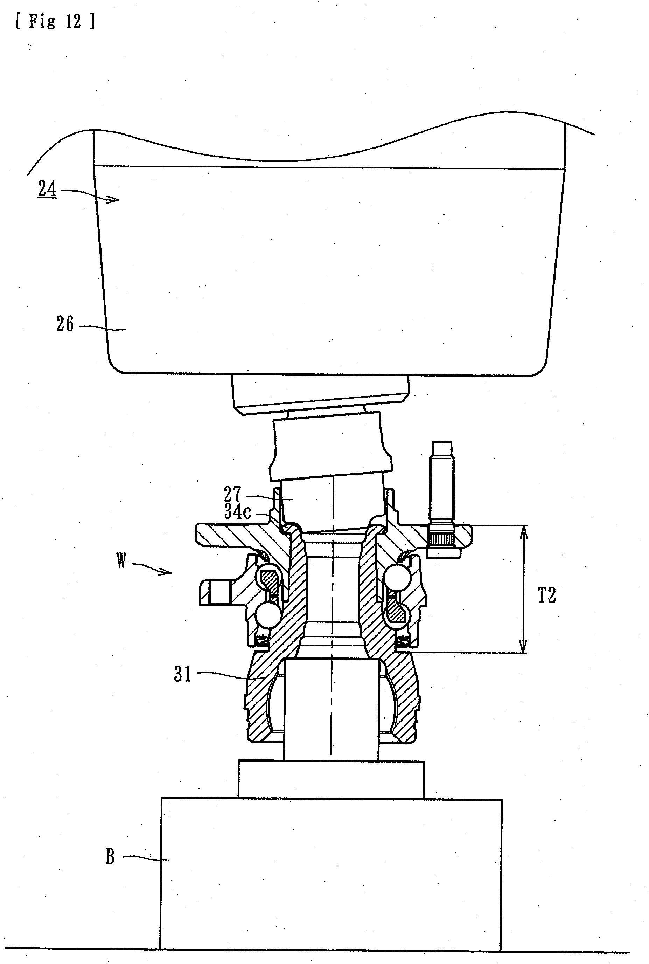

The second embodiment will be described with respect to method for controlling bearing clearance of wheel bearing apparatus of the fourth generation shown in Fig. 9. Fig.9 is a longitudinal section view showing a second preferable embodiment of the wheel bearing apparatus of the present invention, Fig.10 is an explanatory view showing a press-fitting process of an outer joint member of Fig. 9, Fig. 11 is an explanatory view showing a state after the press-fitting process of the outer joint member of Fig. 9, and Fig. 12 is an explanatory view showing a caulking process by the caulking apparatus of Fig. 6. Same reference numerals are used also in this embodiment to structural elements same as those used in the first embodiment and repeating description of them will be omitted.

The wheel bearing apparatus shown in Fig. 9 comprises an inner member 29, an outer member 2, and double row rolling elements 3, 3 rollably contained between the inner and outer members 29, 2. The inner member 29 includes the hub wheel 30 and an outer joint member 31 of a constant velocity universal joint integrally joined to the hub wheel 30.

The hub wheel 30 is made of medium/high carbon steel including carbon of 0.40 to 0.80 % by weight such as S53C and has a wheel mounting flange 6 on its outboard-side end, an inner raceway surface 4a formed on its outer circumference, a cylindrical portion 30a axially extending from the inner raceway surface 4a, and a serration (or spline) 30b formed on its inner circumference. The hub wheel 30 is hardened by high frequency induction quenching so that a region from a base 6b of the wheel mounting flange 6 forming a seal land portion of the outboard-side seal 8 to the cylindrical portion 30a including the inner raceway surface 4a is hardened to have surface hardness of HRC 58 to 64.

The constant velocity universal joint comprises the outer joint member 31, a joint inner ring, cage and torque transmitting balls (not shown). The outer joint member 31 has a cup-shaped mouth portion 32, a shoulder portion 33 forming a bottom of the mouth portion 32 and mounted thereon an inboard-side seal 9, and a cylindrical shaft portion 34 axially extending from the shoulder portion 33 all of which are integrally formed. The shoulder portion 33 is formed on its outer circumference with an inboard-side inner raceway surface 33a opposing to one of the outer raceway surfaces 2a, 2a and the shaft portion 34 is formed on its outer circumference a faucet portion 34a fitting into the cylindrical portion 30a of the hub wheel 30 via a predetermined interference and a serration (or spline) 34b mating with the serration 30b of the hub wheel 30.

The outer joint member 31 is made of medium/high carbon steel including carbon of 0.40 to 0.80 % by weight such as S53C and hardened by high frequency induction quenching so that a region from the shoulder portion 33 to the shaft portion 34 including the inner raceway surface 33a is hardened to have surface hardness of HRC 58 to 64. The end portion of the shaft portion 34 is not quenched and remained as its surface hardness after forging less than HRC 25.

The shaft portion 34 of the outer joint member 31 is fitted into the hub wheel 30 until a stepped portion (shoulder) 35 between the shoulder portion 33 and the shaft portion 34 of the outer joint member 31 is abutted against the end face of the cylindrical portion 30a of the hub wheel 30. In addition, the outer joint member 31 is integrally joined to the hub wheel 30 by caulked portion 34c formed by plastically deforming the end of the shaft portion 34 radially outward.

Then, the axial clearance δ1 of the bearing is measured in accordance with the previously mentioned method before the outer joint member 31 is caulked onto the hub wheel 30. That is, the outer joint member 31 is press-fitted into the cylindrical portion 30a of the hub wheel 30 and stopped once just before the stepped portion 35 is abutted against the end face 36 of the cylindrical portion 30a of the hub wheel 30 as shown in Fig.10. That is, a predetermined distance S is remained at this time between the stepped portion 35 of the outer joint member 31 and the end face 36 of the cylindrical portion 30a of the hub wheel 30 and the thus the axial clearance of the bearing is positive. Under this state, the axial distance T0 from a reference surface (side surface of the shoulder 33) 37 of the outer joint member 31 to the reference surface 22 of the hub wheel 30 is measured and furthermore an initial axial clearance δ0 of the bearing is measured from an axial moving amount of the outer member 2 relative to the inner member 29.

In this case, the reference surface of the hub wheel 30 is not limited to the outboard-side surface 22 of the wheel mounting flange 6. It may be possible to use the outboard-side end face 23 of the hub wheel 30 as the reference surface of the hub wheel 30 to measure an axial distance T0'. It may be also possible to measure an axial distance T0" from the reference surface (stepped portion of the mouth portion 32) 32a of the outer joint member 31 to the reference surface 22 of the hub wheel 30.

Then, the outer joint member 31 is continuously press-fitted into the hub wheel 30 until the stepped portion 35 of the outer joint member 31 is abutted against the end face 36 of the cylindrical portion 30a of the hub wheel 30 as shown in Fig. 11 and the axial distance T1 from the reference surface 37 of the outer joint member 31 to the reference surface 22 of the hub wheel 30 is measured. Then, an axial bearing clearance δ1 after the press-fitting of the outer joint member 31 into the hub wheel 30 is obtained from the formula δ1=δ0-(T0-T1).

Then as shown in Fig. 12, the caulked portion 34c is formed by plastically deforming (i.e. caulking) the end of the shaft portion 34 of the outer joint member 31 radially outward with applying preload to the bearing by pressing the wheel mounting flange 6 of the hub wheel 30 under a state in which the outer joint member 31 is placed on the receptacle table B for supporting the preload and pressing force. That is, similarly to the first embodiment, the caulking jig 27 secured on the caulking head 26 is abutted against a work (i.e. wheel bearing apparatus) W by descending the caulking head 26 by a predetermined stroke.

Then, the operation process for correcting a completion end position of caulking operation of the caulking apparatus 24 is performed prior to the caulking process mentioned above and this information is transferred to the caulking apparatus 24. Then, an assembly width T2 of a product (wheel bearing apparatus) after caulking operation is changed by setting a predetermined stroke with the stopper and changing the completion end position of the caulking apparatus 24 and thus the amount of variation of the bearing clearance due to the caulking operation is changed. At this time, the bearing clearance (preload amount) δ2 of the finally assembled product after caulking can be obtained from the formula δ2 = δ1 + (T1 + T2).

Also in this embodiment, T2 can be obtained by operating previously measured δ1 and T1 of individual products with keeping the bearing clearance δ2 of the finally assembled product constant. In other words, the caulking process is performed by adjusting the completion end position of the caulking apparatus 24 through the stopper 25 so that it becomes T2 obtained by operating δ1, T1 of individual products.

The axial distances T1', T2' may be measured by using outboard-side end surface 23 of the hub wheel 30 as the reference surface for measuring not only the assembly width T0 but T1 and T2. Furthermore, it may be possible to measure axial distances T1", T2" from the reference surface 32a (stepped portion of the mouth portion 32) of the outer joint member 31 to the reference surface 22 of the hub wheel 30.

The present invention has been described with reference to the preferred embodiments and its modifications. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The present invention can be applied to wheel bearing apparatus of the self-retaining structure in which a hub wheel or an outer joint member of constant velocity universal joint forming the bearing portion is united by plastically deform parts of them.

### Explanation of Reference numerals and Characters

- 1, 29: inner member
- 2: outer member
- 2a: outer raceway surface
- 2b: body mounting flange
- 3: rolling element
- 4, 30: hub wheel
- 4a, 5a, 33a: inner raceway surface
- 4b, 30a: cylindrical portion
- 4c, 30b, 34b: serration
- 4d, 34c: caulked portion
- 5: inner ring
- 6: wheel mounting flange
- 6a: hub bolt
- 6b: inboard-side base of wheel mounting flange
- 7: cage
- 8: outboard-side seal
- 9: inboard-side seal
- 10, 15: core metal
- 10a, 15a: fitting portion
- 10b,15b: radial portion
- 11, 16: sealing member
- 11a, 16a: side lip
- 11b,16b: dust lip
- 11c,16c: grease lip
- 12: grease
- 13: sealing plate
- 14: slinger
- 14a: cylindrical portion
- 14b: standing plate portion
- 17: labyrinth seal
- 18: magnetic encoder
- 19: smaller end face of inner ring
- 20, 36: end face of cylindrical portion of hub wheel
- 21: larger end face of inner ring
- 22: outboard-side surface of wheel mounting flange
- 23: outboard-side end surface of hub wheel
- 24: caulking apparatus
- 25: stopper
- 26: caulking head
- 27: caulking jig
- 28: identification code
- 31: outer joint member
- 32: mouth portion
- 32a: step portion of mouth portion
- 33: shoulder portion
- 34: shaft portion
- 34a: faucet portion
- 35: step portion of outer joint member
- 37: side surface of shoulder portion of outer joint member
- 51: inner member
- 52: outer member
- 52a: outer raceway surface
- 52b: body mounting flange
- 53: ball
- 54: hub wheel
- 54a, 55a: inner raceway surface
- 54b: cylindrical portion
- 54c: serration
- 54d: caulked portion
- 55: inner ring
- 56: wheel mounting flange
- 56a: hub bolt
- 57: cage
- 58, 59: seal
- 60: smaller end face of inner ring
- 61: shoulder portion of hub wheel
- 62: larger end face of inner ring
- 63: outboard-side surface of wheel mounting flange
- B: receptacle table
- L: stroke of caulking apparatus
- S: distance
- t0: bearing width before press-fitting of inner ring
- T0, T0', T0": bearing width before press-fitting of inner ring (outer joint member)
- t1: bearing depth after press-fitting of inner ring
- T1, T1', T1": bearing depth after press-fitting of inner ring (outer joint member)
- t2: bearing width after caulking
- T2, T2', T2": bearing width after caulking
- W: work
- δ0: initial bearing clearance
- δ1: axial bearing clearance after press-fitting of inner ring
- δ2: bearing clearance of finally assembled product
- γ: corrected value of deformation amount of inner ring

## Claims

1. Method for controlling bearing clearance of wheel bearing apparatus comprising an outer member (2) formed on its outer circumference with a body mounting flange (2b) to be mounted on a body of a vehicle and on its inner circumference with double row outer raceway surfaces (2a, 2a; 2a, 2a); an inner member (1, 29) including a hub wheel (4, 30) and an inner ring (5) or an outer joint member (31) of a constant velocity universal joint, the hub wheel (4, 30) being formed on its one end with a wheel mounting flange (6) and having a cylindrical portion (4b, 30a) axially extending from the wheel mounting flange (6), and the inner ring (5) or the outer joint member (31) being press-fitted onto or into the cylindrical portion (4b, 30a) of the hub wheel (4, 30), the inner member (1, 29) being formed on its outer circumference with double row inner raceway surfaces (4a, 5a; 4a, 33a) opposing to the double row outer raceway surfaces (2a, 2a; 2a, 2a); and double row rolling elements (3,3; 3, 3) freely rollably contained between the outer raceway surfaces (2a, 2a; 2a, 2a) of the outer member (2) and the inner raceway surfaces (4a, 5a; 4a, 33a) of the inner member (1, 29); and the inner ring (5) or the outer joint member (31) being secured on the hub wheel (4, 30) by a caulked portion (4d, 34c) formed by plastically deforming the end of the cylindrical portion (4b) of the hub wheel (4) or the end of the outer joint member (31) radially outward **characterized in that** the method comprises steps of:
measuring an axial distance (T0) and an initial axial clearance (δ0) between reference surfaces of the hub wheel (4) and the inner ring (5) or reference surfaces of the hub wheel (30) and the outer joint member (31) with temporally stopping press-fitting operation under a positive bearing clearance state during press-fitting the inner ring (5) or the outer joint member (31) onto or into the cylindrical portion (4b, 30a) of the hub wheel (4, 30);
measuring an axial distance (T1) between the reference surfaces of the hub wheel (4) and the inner ring (5) or the reference surfaces of the hub wheel (30) and the outer joint member (31) after further continuation and completion of the press-fitting operation and then obtaining an axial clearance (δ1) under this state from a formula δ1=δ0-(T0-T1), and
obtaining an axial distance (T2) after the caulking operation between the reference surfaces of the hub wheel (4) and the inner ring (5) or the reference surfaces of the hub wheel (30) and the outer joint member (31) from a formula T2=δ2-δ1-T1 so that the axial distance (T2) becomes a target value of the bearing clearance (δ2) after the caulking operation and then changing a completion end position of caulking operation of a caulking apparatus (24).

2. Method for controlling bearing clearance of wheel bearing apparatus of claim 1 further comprising a step of arbitrarily changing the end position of completion of the caulking operation of a caulking apparatus (24) by a movable stopper (25).

3. Method for controlling bearing clearance of wheel bearing apparatus of claim 1 further comprising steps of previously measuring a deformation amount of the inner ring (5) due to the caulking operation and then adding a corrected value (γ) of the deformation amount converted to the axial direction to the bearing clearance (δ2) after the caulking operation.

4. Method for controlling bearing clearance of wheel bearing apparatus of claim 1 or 2 further comprising steps of transferring the bearing clearance (δ1) and the axial distance (T1) before the caulking operation to the caulking apparatus (24) together with identification codes (28) printed on individual wheel bearing apparatus and storing therein and then retrieving these information just before the caulking operation by matching the identification codes to the information (28).

5. Method for controlling bearing clearance of wheel bearing apparatus of claim 1 wherein the inner member (29) comprises the hub wheel (30) and the outer joint member (31), the outer joint member (31) is integrally formed with a cup-shaped mouth portion (32), a shoulder portion (33) forming a bottom of the mouth portion (32), and a cylindrical shaft portion (34) axially extending from the shoulder portion (33), the shaft portion (34) is formed with a faucet portion (34a) fitted into the cylindrical portion (30a) of the hub wheel (30) via a predetermined interference and with a serration (34b) at one end of the faucet portion (34a), a serration (30b) engaging the serration (34b) of the outer joint member (31) is formed on the inner circumference of the hub wheel (30), a preload is applied to the wheel bearing apparatus by pressing the hub wheel (30) with the outer joint member (31) being vertically placed on a receptacle table (B) and then the end of the shaft portion (34) of the outer joint member (31) is plastically deformed radially outward.
